# EUROPEAN PATENT SPECIFICATION

(11) **EP 2 209 196 B1**
(45) Date of publication and mention of the grant of the patent: **19.03.2014**
(21) Application number: 10150134.4
(22) Date of filing: 05.01.2010
(51) Int. Cl.: H02M 3/335, H02M 1/32

(54) **Protection circuit for an isolated switch-mode power supply**
Schutzschaltung für ein isoliertes Schaltnetzteil
Circuit de protection pour une alimentation à découpage isolée

(30) Priority: 16.01.2009 TR 200900348
(43) Date of publication of application: 21.07.2010
(73) Proprietor: Vestel Elektronik Sanayi ve Ticaret A.S., 45030 Manisa (TR)
(72) Inventor: Çesmeci, Mete, 45030 Manisa (TR)
(74) Representative: Cayli, Hülya

(56) References cited:
- EP-A1- 1 331 722
- US-A- 6 088 244
- US-A1- 2004 201 937
- US-A1- 2006 028 847

## Description

### Technical Field

The present invention relates to a protection circuit and a method which protects the power supply by interrupting the energy transmission in case of a short-circuit (error) at any one of the outputs of the SMPS-type (Switched Mode Power Supply) power supply, more specifically, it relates to a protection circuit and method developed in order to ensure that the protection mode of the system is activated in case of an error in SMPS.

### Prior Art

Switched Mode Power Supplies (SMPS) are used in today's television receivers, video recorders, audio equipments, computers and such. These power supplies commonly comprise a main switching transistor which is connected to the primary winding of a transformer, a drive circuit which periodically switches the said switching transistor between on and off, a control circuit which controls the drive current transmitted to the main switching transistor in such a way that the output voltages received from the secondary winding of the said transformer can be stabilized.

In devices which can operate in normal and stand-by mode, the general application is that the current that is transmitted to the input of the said main switching transistor is reduced and thus operating voltages generated by SMPS are reduced or completely shut down when stand-by mode is on. To this end, the duty cycle of the switching voltage which controls the base input of the main switching transistor can be considerably reduced so as to provide low-value output voltages, as needed in stand-by mode. An additional stand-by power supply may be present in systems which utilize SMPS. In this case, SMPS can completely be shut down in stand-by mode.

Switched Mode Power Supplies (SMPS) also comprises a protection circuit which is activated in cases of overload, short-circuit or other errors which take place at output voltages in secondary parts. Since the collector-emitter current of the main switching transistor can reach very high values in cases of an error which consequently may damage the said switching transistor as well as other circuit components, the said protection circuit is essential for the security of the system.

The prior art of the invention includes various protection circuits and methods developed in order to prevent any harm to SMPS in case of an error. The published patent application No. US2001009517 discloses a method in which an SMPS is shut down when a short-circuit takes place and a design wherein the said method is applied. In order to ensure a comprehensive short-circuit protection in the said SMPS which comprises a controllable switch in its primary circuit regardless of the position of short-circuit, it is ensured that the controllable switch is open when the voltage of the electrolytic capacitor in the primary circuit drops down a pre-determined threshold value. For this purpose, two capacitive voltage devices comprising two capacitances are parallel connected to the electrolytic capacitor. The capacitive compares the voltage level on the voltage divider with a reference voltage and turns the controllable switch on if the said voltage drops below the reference value.

The published patent application US4270164 also discloses a short-circuit protection developed for SMPS. A transformer is connected to the main current line in the said SMPS design. Secondary windings of the transformer comprise a voltage signal which indicates the rapidly increasing short-circuit current. A threshold determiner that is connected to the output of the secondary windings detects whether or not the voltage signal on the secondary windings exceeds the pre-determined threshold value. The signal received from the threshold determiner is used to activate the high current protection circuit and in case of an error it shuts down the output switching devices, preventing high-current short circuit.

Another patent application EP1331722A1 discloses switch mode power supplies (SMPS) with a protection circuit. Said SMPS comprises a power switching transistor in series with the primary winding of a transformer and a further transistor arranged at the primary side of the power supply. Furthermore, a standby control circuit is arranged at the secondary side of the transformer and coupled to said further transistor for switching to standby mode in response to a standby switching signal. Said SMPS also comprises a protection circuit having an output terminal coupled to the standby control circuit for actuating said further transistor in the event of a fault and having a control input terminal connected to different output voltages which are generated by SMPS.

Patent application US2004201937A1 discloses an overcurrent protection circuit for switching power supplies. Said protection circuit comprises, a current detection resistor to detect a current in secondary side of the transformer of power supply; transistors and to be turned on by the current detection; a photocoupler to be turned on and off by the transistors; and a switching power supply controller to control on-duty of a power MOSFET for removing the overcurrent. The current detection resistor is provided in the line of a secondary winding so as to be able to individually limit a current flowing through the secondary winding.

However, with regard to integrated circuits, transformer topology and tolerances, the said protection circuits cannot activate the protection mode during error period in the known multi-output flyback SMPS designs. This condition poses risk for the security of the system to which the power supply is connected.

### Aim of the Invention

The aim of the present invention is to develop a protection circuit and method which prevent the power supply from being damaged by cutting the energy transmissions in case of a short circuit and such errors which can occur in any of the output voltages of the switched mode power supplies (SMPS).

Another aim of the present invention is to ensure that in case of an error, the protection circuit is activated by means of an error monitoring circuit which is attached to the secondary part of SMPS-type power supplies.

### Brief Description of the Drawings

Figure 1 is the block diagram which shows the working principle of the power supply which comprises a security aimed protection circuit of the invention.
Figure 2 shows a sample circuit diagram of the power supply which comprises a security aimed protection circuit of the invention.

### Disclosure of the Invention

The present invention relates to a protection circuit which protects the power supply by cutting the energy transmission in case of a short-circuit (error) at one of the outputs of the SMPS-type power supply. The method and circuit proposed by the present invention aims to ensure that the said protection circuit is activated in case of an error in SMPS.

In case of an error, the SMPSs of the known art operate as follows: there is a switcher integrated circuit (IC) on the primary part of the SMPS. This switching circuit (IC) switches the power supply on and off according to the feedback signal transmitted by the optical binder (7). A parallel regulator (5) provides the optical binder (7) with the required current and thus it is ensured that the isolated feedback signal is transmitted to the switcher integrated circuit (IC) on the primary part. In case of an error, the parallel regulator (5) will conduct 0ᵥ to the optical binder (7) and this signal will be transmitted to the IC as a feedback signal by the optical binder (7) and IC will cut the power flow by shutting down the system.

However, such a protection is not secure. The system cannot activate the protection mode in some instances and this causes the power supply to be damaged.

The present invention comprises a protection circuit which controls the switcher integrated circuit (IC) on the primary part of the SMPS by means of the optical binder (7) and the regulator circuit (5) on the secondary part.

The protection circuit of the present invention monitors the multi-output on the secondary side of the power supply and short circuits the regulator (5) on the secondary part of the power supply by means of a switch (3) and thus ensures that the integrated circuit (IC) on the primary part is off in the case that a short circuit takes place at any of these outputs.. It is ensured by this way that the power flow to the secondary part is cut off when a short-circuit take place and thus the power supply is protected.

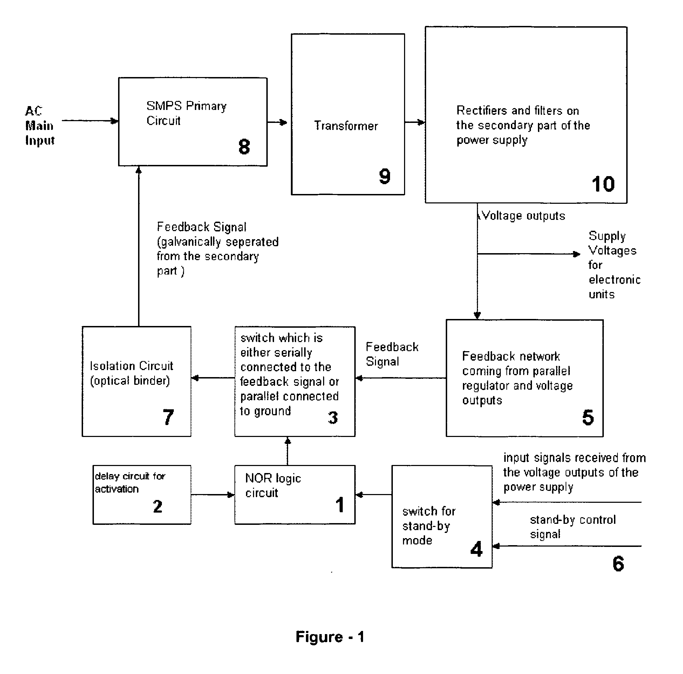

The protection circuit and working principle of the present invention is shown in the block diagram of Figure 1. The SMPS primary circuit (8), transformer (9), rectifiers and filters (10) which are provided on the secondary part of the supply isolate both the primary and secondary parts while at the same time the isolation circuit (optical binder) (7) which transmits the feedback signal received from the secondary part to the integrated circuit (IC) on the primary part, the parallel regulator which provides optical binder with feedback signal and the feedback network (5) received from the voltage outputs constitute the known components of an SMPS.

The protection circuit (A) of the invention comprises a NOR logic circuit (1) which commands the switch (3) to cut the power transmission in case of an error, controlling the output voltages which are connected thereto; a delay circuit (2) which prevents activation of the protection circuit for a period when the system is first activated; a switch (3) which is connected to the said NOR circuit and delay circuit and which cuts the power off by switching the integrated circuit (IC) off in case of an error; serial switches (4) (Q205) which separate the output voltage lines from NOR circuit inputs and which are controlled by the stand-by signal coming from the micro controller.

As can be seen in Figure 1, the function of the protection circuit (A) of the invention is performed as follows:

The output voltages on the secondary part of the SMPS are connected to the NOR logic controller circuit (2) and are monitored by this circuit. If any of the output voltages decrease, the NOR logic circuit sends a signal to the switch (3) to switch the integrated circuit (IC) on the primary part off. The switch (3) is controlled by the NOR logic circuit (1) and the delay circuit (2).

Integrated circuits (IC) activate the protection mode in some SMPSs when the feedback line is an open circuit while they activate the protection mode in other SMPSs when the feedback line short circuits. The circuit of the invention can be used for both cases.

Open-circuit switch (3) serial connected to the feedback line or short-circuit switch (3) parallel connected to the line and ground are added to the circuit accordingly.

When the protection system (circuit) is active, the parallel switch, which is normally on, is switched off or the serial switch (3), which is normally off, is switched on in the case that a short circuit (0 Volt) takes place at any of the voltage outputs. When the short circuit is over, parallel switch (3) is on or the serial switch (3) is off. Thus the feedback cycle is accomplished and the SMPS is back to normal operation.

When the feedback circuit first received energy, SMPS outputs will be 0 Volt. In order to prevent this situation from being misinterpreted as a short circuit, a delay circuit (2) connected to the NOR logic circuit (1) retards / inactivates the protection circuit (A) for a period required for the output voltages to reach the nominal value.

Most electronic devices comprise a micro controller to manage the device in stand-by mode, and this micro controller monitors input sources such as the remote control, on-off button etc., opens the device, makes on-off checks on feedback circuits. An output of the micro controller generates stand-by signal. When the device to which the power supply (SMPS) is connected is in stand-by mode, some outputs of the SMPS (all the voltages except the required ones during stand-by mode will be cut off) will be zero voltage. In order that the protection circuit does not interpret this situation as a short circuit, on the inputs of the NOR logic circuit (1), to which each output voltage is connected, there are serial switches (4) (Q205) which separate these lines from the NOR circuit inputs. These switches are controlled by the control signal (6) coming from the micro controller. During ordinary operation, the serial switches are off i.e. they transmit, and protection function applies to these lines as well. Since the switches are on during stand-by mode, protection function will not apply to these lines. The said switches (4) are preferably on the output voltages which are lowered during the stand-by mode of the SMPS (e.g. 12V line).

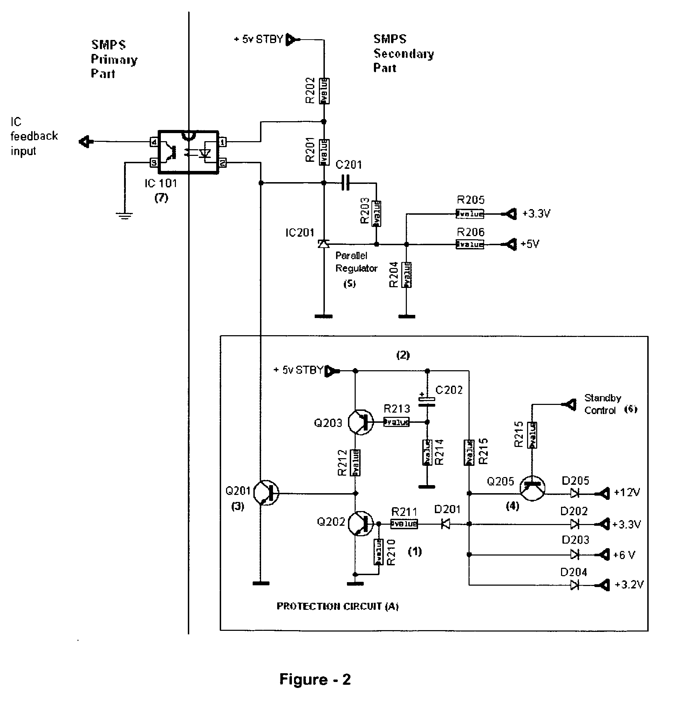

Figure 2 shows a sample circuit diagram of the protection circuit (A) of the invention. Q201 transistor on the circuit functions as a control switch (3). Q203 transistor and the connected resistors R213, R212, R214 and the capacitor C202 constitute the delay circuit (2). Q205 which is connected to the stand-by control signal (6) indicates the serial switches (4) to which the output voltages are connected. Q202, R210, R211, R215 and D201 constitute the NOR logic controller (1). There are serial connected diodes D202, D203, D204, D205 between the NOR logic inputs and voltage outputs. IC101 forms the optical binder (7) whereas IC201 and the peripheral units make up the parallel regulator and the feedback network (5). The known parts of the SMPS are not shown in the said circuit diagram.

The working principle of the protection circuit of the present invention, shown in Figure 2, is disclosed below:

Since the monitoring points of serial switches D202, D203, D204, D205, which are connected to the base circuit of the Q202 transistor of NOR logic circuit, are zero volt when circuit first receives energy, these diodes are in cutoff mode. Due to the fact that the C202 voltage, which is uncharged at first and is charged through R214, is zero volt, Q203 is in cutoff mode. Therefore 0201, through the base of which no current flows, is in cutoff mode. Thus Q201, a switch parallel connected between the feedback line and GND does not interfere in the feedback line and SMPS starts regular operation.

Due to the fact that the monitoring points of D202, D203, D204 and D205 are at different voltages from zero volts during regular operation, Q202 is in conduction mode with the base current flowing through R215, D201, R211. Since now C202 is charged, Q203 is in conduction mode with the base current flowing through R214. Q203 and R212 generate the collector charge of Q202. As Q202 is in conduction mode, Q201 connected thereto is in cutoff mode. Therefore Q201, a switch parallel connected between the feedback line and GND does not interfere in the feedback line. Since the stand-by control signal is high during regular operation, Q205 is in conduction mode and the circuit monitoring function on 12V line is active.

Approximately zero volt will be seen on the monitoring points of at least one of D202, D203, D204, D205 in case of a short circuit and NOR logic will be cutoff as the base current of Q202 is interrupted. Due to the base current flowing through Q203 and R212, Q201 enters conduction mode and forces the SMPS to enter the protection mode by short circuiting the feedback line to the reference ground. Therefore all the voltages are interrupted as SMPS is off and short circuit current does not flow any more. As long as there is short circuit on at least one of the monitoring points of D202, D203, D204 and D205, SMPS circuit will be forced to be off at each start attempt and protection function is accomplished during this period.

When system enters stand-by mode, zero volt will be seen on some of the said output voltages (e.g. 12V line). Since the stand-by control signal, which is normally high, is lower in stand-by mode, Q205 enters cutoff mode and short circuit monitoring function will not apply on 12V line.

The present invention can be applied to switched mode power supplies on any electronic device.

The protection circuit of the invention solves the high current (short circuit current) problems which may occur on the secondary part and brings solution to the heating problems which may take place on primary part in case of an error owing to the fact that the integrated circuit (IC) on the primary part is switched off.

## Claims

1. A protection circuit (A) configured to control a switcher integrated circuit on the primary side of a switch mode power supply by means of a regulator circuit (5) and an isolation circuit (7) on the secondary side, the protection circuit being configured to protect the system by interrupting the energy transmission in the case that a short circuit occurs at any of the outputs of the said power supply, and comprising:
- a NOR logic circuit (1) to whose inputs respective outputs of the power supply are connected;
- a delay circuit (2) connected to the NOR logic circuit (1) and configured to deactivate the protection circuit (A) for a period required for the output voltages to reach the nominal value;
- a switch (3) connected to a feedback line and controlled by the NOR logic circuit (1) and the delay circuit (2) and configured to switch off the integrated circuit on the primary side in the case that a short circuit occurs at any of the outputs,
the protection circuit being **characterized in that** it further comprises
- at least a serial switch (4) controlled by a stand-by control signal (6), which is connected to a respective output whose voltage is lowered during the standby mode and which is configured to separate said respective output from a respective NOR circuit input during the stand-by mode.

2. A protection circuit (A) according to Claim 1 **characterized in that** it comprises diodes (D202, D203, D204, D205) which are connected between the said outputs and respective NOR logic circuit inputs.

3. A protection circuit (A) according to Claim 1 **characterized in that** said serial switch (4) comprises a transistor.

4. A protection circuit (A) according to Claim 1 **characterized in that** said switch (3) connected to the feedback line comprises a transistor.

5. A protection circuit (A) according to Claim 4 **characterized in that** the transistor is connected between the feedback line and ground.

## Patentansprüche

1. Eine Schutzschaltung (A), ausgebildet zur Steuerung einer integrierten Schaltung mit einem Schalter (switcher) auf der Primärseite eines Schaltnetzteils (SMPS) über einen Regelkreis (5) und eine Isolationsschaltung (7) auf der Sekundärseite, wobei die Schutzschaltung ausgebildet ist, das System durch Unterbrechen der Strom- oder Energiezufuhr bei Auftreten eines Kurzschlusses zu schützen, und zwar bei oder auf irgendeinen der Ausgänge des Netzteils, und weiter mit
- einer NOR-Logik-Schaltung (1), mit deren Eingängen jeweils Ausgänge des Netzteils verbunden sind;
- einer Verzögerungsschaltung (2), verbunden mit der NOR-Logik-Schaltung (1) und ausgebildet, die Schutzschaltung (A) zu deaktivieren, dies für eine Zeitspanne, die für die Ausgangsspannungen erforderlich ist, den Nenn- oder Nominalwert zu erreichen;
- ein Schalter (3), der mit einer Rückkopplungsleitung verbunden ist und von der NOR-Logik-Schaltung (1) und der Verzögerungsschaltung (2) steuerbar ist, und ausgebildet, die integrierte Schaltung auf der Primärseite ab- oder auszuschalten, sollte ein Kurzschluss bei irgendeinem der Ausgänge auftreten;
die Schutzschaltung wird **dadurch gekennzeichnet, dass** sie weiter aufweist
- zumindest einen seriellen Schalter (4), der von einem Standby-Steuersignal (6) steuerfähig ist, welcher mit einem jeweiligen Ausgang gekoppelt ist, dessen Spannung im Standby-Modus reduziert wird und welcher ausgebildet ist, den jeweiligen Ausgang von einem jeweiligen NOR-Schaltungseingang während des Standby-Modus zu trennen.

2. Schutzschaltung (A) nach Anspruch 1, **gekennzeichnet durch** Dioden (D202, D203, D204, D205), die zwischen den Ausgängen und jeweiligen NOR-Logikschaltungs-Eingängen gekoppelt oder verbunden sind.

3. Schutzschaltung (A) nach Anspruch 1, **dadurch gekennzeichnet, dass** der serielle Schalter (4) einen Transistor aufweist.

4. Schutzschaltung (A) nach Anspruch 1, **dadurch gekennzeichnet, dass** der mit der Rückkopplungsleitung verbundene Schalter (3) einen Transistor aufweist.

5. Schutzschaltung (A) nach Anspruch 4, **dadurch gekennzeichnet, dass** der Transistor zwischen der Rückkopplungsleitung und Masse geschaltet oder verbunden ist.

## Revendications

1. Circuit de protection (A) configuré pour commander un circuit intégré de commutation sur le côté primaire d'une alimentation électrique à mode de commutation au moyen d'un circuit régulateur (5) et d'un circuit d'isolation (7) sur le côté secondaire, le circuit de protection étant configuré pour protéger le système en interrompant la transmission d'énergie au cas où un court-circuit se produit à une quelconque des sorties de ladite alimentation électrique, et comprenant :
un circuit logique NOR (1) aux entrées duquel des sorties respectives de l'alimentation électrique sont connectées ;
un circuit à retard (2) connecté au circuit logique NOR (1) et configuré pour désactiver le circuit de protection (A) pendant une période requise pour que les tensions de sortie atteignent la valeur nominale ;
un commutateur (3) connecté à une ligne de rétroaction et commandé par le circuit logique NOR (1) et le circuit à retard (2) et configuré pour éteindre le circuit intégré sur le côté primaire au cas où un court-circuit se produit à une quelconque des sorties,
le circuit de protection étant **caractérisé en ce qu'**il comprend en outre au moins un commutateur de série (4) commandé par un signal de commande de veille (6), qui est connecté à une sortie respective dont la tension est réduite durant le mode de veille et qui est configuré pour séparer ladite sortie respective d'une entrée de circuit NOR respective durant le mode de veille.

2. Circuit de protection (A) selon la revendication 1, **caractérisé en ce qu'**il comprend des diodes (D202, D203, D204, D205) qui sont connectées entre lesdites sorties et entrées de circuit logique NOR respectives.

3. Circuit de protection (A) selon la revendication 1, **caractérisé en ce que** ledit commutateur de série (4) comprend un transistor.

4. Circuit de protection (A) selon la revendication 1, **caractérisé en ce que** ledit commutateur (3) connecté à la ligne de rétroaction comprend un transistor.

5. Circuit de protection (A) selon la revendication 4, **caractérisé en ce que** le transistor est connecté entre la ligne de rétroaction et la masse.
